# EUROPÄISCHE PATENTSCHRIFT

(11) **EP 1 603 408 B1**
(45) Veröffentlichungstag und Bekanntmachung des Hinweises auf die Patenterteilung: **26.08.2009**
(21) Anmeldenummer: 04715830.8
(22) Anmeldetag: 28.02.2004
(51) Int. Cl.: A23L 1/226

(54) **VERWENDUNG VON DIVANILLIN ALS AROMASTOFF**
USE OF DIVANILLIN AS A FLAVOURING AGENT
UTILISATION DE DIVANILLINE EN TANT QU'AGENT AROMATIQUE

(30) Priorität: 08.03.2003 DE 10310204
(43) Veröffentlichungstag der Anmeldung: 14.12.2005
(73) Patentinhaber: Symrise GmbH & Co. KG, 37603 Holzminden (DE)
(72) Erfinder: REISS, Ingo, 37603 Holzminden (DE); GATFIELD, Ian-Lucas, 37671 Höxter (DE); KRAMMER, Gerhard, 37603 Holzminden (DE); KINDEL, Günter, 37671 Höxter (DE); CLERC, Albert DI, Verstorben (DE)
(74) Vertreter: Eisenführ, Speiser & Partner
(86) Internationale Anmeldenummer: PCT/EP2004/002004
(87) Internationale Veröffentlichungsnummer: WO 2004/078302

(56) Entgegenhaltungen:
- DE-B- 1 183 064
- DATABASE WPI Section Ch, Week 199537 Derwent Publications Ltd., London, GB; Class B07, AN 1995-281172 XP002282299 & JP 07 179853 A (KANEBO LTD), 18. Juli 1995 (1995-07-18)
- ANKLAM E ET AL: "Oxidation behaviour of vanillin in dairy products." FOOD CHEMISTRY 1997 FOOD & DRUG ANALYSIS/CONSUMER PROTECTION UNIT, JOINT RES. CENT. ISPRA, COMMISSION OF THE EU, I-21020 ISPRA, ITALY, Bd. 60, Nr. 1, Seiten 43-51, XP002282298

## Beschreibung

Die Erfindung betrifft die Verwendung von 6.,6'-Dihydroxy-5,5'-dimethoxy-11,1'-biphenyl]-3,3'-dicarboxaldehyde (CAS-Nr. 2092-49-1), (Synonyme: 2,2'-Dihydroxy-3,3'-dimethoxy-5,5'-diformylbiphenyl bzw. 5,5'-Bivanillin bzw. Dehydrodivanillin) - im Folgenden kurz Divanillin - als Aromastoff. Ferner betrifft die Erfindung die Verwendung von Divanillin zur Vermittlung oder Verstärkung bestimmter Geschmackseindrücke.

Divanillin besitzt die folgende Struktur:

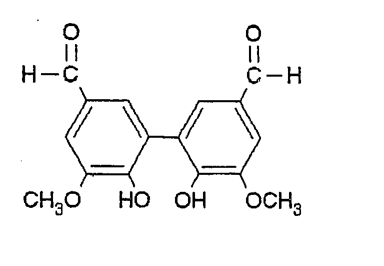

Es sind bereits diverse Aroma- und Geschmackstoffe bekannt, die bei der sensorischen Untersuchung einen mundfüllenden Geschmackseindruck von Cremigkeit und Sahnigkeit vermitteln. Hierbei kann es sich um flüchtige oder nichtflüchtige Verbindungen handeln. Bei den flüchtigen Aromastoffen seien beispielsweise delta-Lactone, Acetoin und Acetoinester, Ester höherer Fettsäuren oder langkettige gesättigte oder ungesättigte Aldehyde wie 12-Methyltridecanal, 2,4-Decadienal oder Dodecadienal, genannt. Bei den nichtflüchtigen Verbindungen seien beispielsweise lipolysierte Fette, modizierte Stärken, Xylooligosaccharide, modifizierte Zucker, Zuckerester, Aminosäuren oder Peptide genannt.

Aufgabe der vorliegenden Erfindung war es, neue Aromastoffe anzugeben, die insbesondere einen mundfüllenden Geschmackseindruck von Cremigkeit und Sahnigkeit, Haftfestigkeit, Milchfettigkeit und/oder Süße vermitteln sollten. In eigenen Untersuchungen hat sich nun überraschend gezeigt, dass Divanillin einen angenehmen, haftfesten und mundfüllenden Geschmackseindruck von Cremigkeit, Sahnigkeit, Milchfettigkeit, Buttrigkeit und Süße vermittelt und deshalb die gestellte Aufgabe löst. Dies ist insbesondere deshalb überraschend, weil beispielsweise in der JP 07-179853 A2 Divanillin als geruchs- und geschmacklose Substanz beschrieben wird.

Dementsprechend wird gemäß der JP 07-179853 A2 Divanillin auch nicht als Aromastoff eingesetzt, sondern zu einem gänzlich anderem Zweck, nämlich als Antioxidans; insbesondere zur Stabilitätserhöhung in Kosmetika, Pharmazeutika oder Lebensmitteln wird dabei die Verwendung von Divanillin als Antioxidationsmittel angeben, wobei die Menge an Divanillin in den fertigen Zubereitungen mit 0,001 bis 5 Gew.-%, insbesondere mit 0,01 bis 1 Gew.-% angegeben wird.

Erwähnung findet Divanillin in der Literatur zudem als Komponente, die beim Aufbau des Lignins eine Rolle spielt. So kann Divanillin z.B. beim chemischen oder enzymatischem Abbau von Holz nachgewiesen werden (Geochimica et Cosmochimica Acta, 1992, 56, 4025-4043; Chem. Ber., 1965, 98, 1879-1892).

Divanillin findet daneben als hautaufhellendes Mittel (JP 06-145040 A2) und als Fixateur in Parfümölen (z.B. JP 04-255798 A2) Verwendung.

Verfahren zur Herstellung von Divanillin mit Hilfe von Oxidationsmitteln finden sich bespielsweise in Biosci. Biotechnol. Biochem., 1999, 63 (2), 390-394; J. Org. Chem., 1957, 22, 1299-1232 oder auch Chem. Ber., 1961, 94, 3227-3228.

Die enzymatische Synthese ausgehend vom Vanillin mit Hilfe von Peroxidasen und Wasserstoffperoxid wird in Chimia, 1972, 26 (7), 366-368 beschrieben. Ein ähnlicher Hinweis findet sich in Food Chemistry, 1997, 60 (1), 43-51.

Vanillin ist die wertbestimmende Komponente in Vanille-Schoten. Beim Herstellungsprozess von der geernteten grünen Vanille-Schote bis zur fermentierten braunen bzw. schwarzen Schote geht mehr als die Hälfte des ursprünglich vorhandenen Vanillins durch enzymatische Abbaureaktionen verloren, der Vanillin-Gehalt wird von ursprünglich etwa 5-6 Gew.-% im Verlaufe der Fermentation auf 2-3 Gew.-% (20.000 - 30.000 ppm) reduziert.

Divanillin war bisher noch nicht als Inhaltsstoff von Vanille-Schoten - unabhängig von der Art der Entstehung bzw. Behandlung - bekannt. Der Nachweis des Vorkommens von Divanillin in Mengen im Bereich 10 - 100 ppm, je nach Herkunftsland, in der Vanille-Schote und den daraus resultierenden Extrakten (siehe Beispiel 3), wurde erstmals im Rahmen der dieser Erfindung zugrunde liegenden Arbeiten erbracht.

In der Literatur wird die Verwendung des Divanillins als Aroma- und Geschmackstoff, d.h. als aromatisierende Komponente, nicht beschrieben.

Durch seinen angenehmen, haftfesten und mundfüllenden Geschmackseindruck von Cremigkeit, Sahnigkeit, Milchfettigkeit, Buttrigkeit und Süße, eignet sich Divanillin ganz besonders zur Einarbeitung in fettarme und fettreduzierte Lebensmittel-Halbfertigwaren und verzehrfertige Lebensmittel (wenngleich auch fettreiche Produkte durch Einsatz von Divanillin positiv beeinflusst werden). Divanillin wird dabei als solches oder in Form einer Aromastoffkomposition, d.h zusammen mit einem oder mehreren weiteren Aroma- und Geschmackstoffen eingesetzt. Den immer stärker an Bedeutung gewinnenden fettarmen und fettreduzierten Produkten, die durch die Reduzierung des Fettgehaltes ihren cremigen, vollen Charakter im Vergleich zu den Vollfettprodukten eingebüßt haben, kann durch Zugabe von Divanillin ein vollerer Geschmack, Cremigkeit, Sahnigkeit und Milchfettigkeit verliehen werden. Beispiele für fettarme bzw. fettreduzierte Produkte sind fettreduzierte Margarine, fettarme Milch, fettarme Joghurt, Mager-Quark, Instant-Desserts sowie fettreduzierte Eiscreme.

Im Rahmen des vorliegenden Textes werden unter einem "Lebensmittel" Stoffe verstanden, die dazu bestimmt sind, in unverändertem, zubereitetem oder verarbeitetem Zustand vom Menschen verzehrt zu werden; als Lebensmittel werden insoweit auch Umhüllungen, Überzüge oder sonstige Umschließungen verstanden, die dazu bestimmt sind, mitverzehrt zu werden, oder bei denen der Mitverzehr vorauszusehen ist.

Unter einem verzehrfertigen Lebensmittel ist ein Lebensmittel zu verstehen, das hinsichtlich der für den Geschmack maßgeblichen Substanzen bereits vollständig zusammengesetzt ist. Unter den Begriff "verzehrfertiges Lebensmittel" fallen Getränke sowie feste oder halbfeste verzehrfertige Lebensmittel. Als Beispiele seine genannt: Tütensuppen, die vor dem Verzehr noch mit Wasser versetzt und dann erhitzt werden müssen und Tiefkühlprodukte, die vor dem Verzehr aufgetaut und auf Verzehrtemperatur erwärmt werden müssen. Auch die bereits genannten Produkte Margarine, Milch, Joghurt, Quark, Instant-Desserts und Eiscreme zählen zu den verzehrfertigen Lebensmitteln.

Der Begriff "Lebensmittel-Halbfertigware" bezieht sich auf Lebensmittel, die dazu bestimmt sind, erst im weiter verarbeiteteten Zustand, nach Hinzufügen von für den sensorischen Eindruck (mit)entscheidenden Aroma- oder Geschmacksstoffen verzehrt zu werden.

"Aromastoffkompositionen" sind keine Lebensmittel, sondern sind konzentrierte Zubereitungen von Aromastoffen und/oder Geschmacksstoffen, die dazu bestimmt sind, einem Lebensmittel einen bestimmten Geruch oder Geschmack zu verleihen.

Eine bevorzugte Aromastoffkomposition zum Aromatisieren eines Lebensmittels umfasst
- Divanillin (vorzugsweise in der unten angegebenen Menge),
- Vanillin
sowie
- gegebenenfalls einen oder mehrere weitere Aroma- und/oder Geschmackstoffe,
wobei das Stoffmengenverhältnis von Divanillin zu Vanillin größer ist als 1 : 200, vorzugsweise größer als 1 : 100.

Eine solche Aromastoffkomposition ist einer Aromastoffkomposition, die durch Extraktion der Vanille-Schote erhalten wird, durch ihren höheren relativen Anteil an Divanillin deutlich überlegen.

Weiter bevorzugt ist eine Aromastoffkomposition zum Aromatisieren eines Lebensmittels, die synthetisches Divanillin, natürliches oder synthetisches Vanillin sowie gegebenenfalls einen oder mehrere weitere Aroma- und/oder Geschmacksstoffe umfasst.

Eine solche Aromastoffkomposition unterscheidet sich von Aromastoffkompositionen, die durch Extraktion der Vanille-Schote erhalten werden, dadurch, dass synthetisches Divanillin eingesetzt wird, welches selbstverständlich kostengünstiger ist als das natürliche Divanillin aus der Vanille-Schote. Vorzugsweise ist auch das Vanillin synthetischen Ursprungs. Der Fachmann ist in der Lage, synthetisches Divanillin und natürliches Divanillin voneinander zu unterscheiden.

Eine weitere bevorzugte Aromastoffkomposition zum Aromatisieren einer Halbfertigware oder eines verzehrfertigen Lebensmittels umfasst Divanillin in einer Menge von 0,1 bis 50 Gew.-%, vorzugsweise 0,1 bis 10 Gew.-%, weiter vorzugsweise 0,2 bis 5 Gew.-%, bezogen auf die Gesamtmasse der Aromastoffkomposition, sowie einen oder mehrere weitere Aroma- und/oder Geschmackstoffe. Die Aromastoffkomposition ist dabei (der obigen Definition entsprechend) selbst kein verzehrfertiges Lebensmittel.

Erfindungsgemäße verzehrfertige Lebensmittel oder Lebensmittel-Halbfertigwaren umfassen Divanillin in einer Menge im Bereich zwischen dem Geschmacksschwellenwert und 0,00099 Gew.% (9,9 ppm), bezogen auf die Gesamtmasse des Lebensmittels, sowie gegebenenfalls einen oder mehrere weitere Aroma- und/oder Geschmackstoffe. Der Geschmacksschwellenwert von Divanillin wurde dabei als deutlich unterhalb von 1 ppm liegend bestimmt.

Besonders bevorzugt sind erfindungsgemäße verzehrfertige Lebensmittel oder Lebensmittel-Halbfertigwaren, die Divanillin in einer Menge im Bereich zwischen 0,0002 und 0,0009 Gew.-% (2 und 9 ppm) enthalten, und ganz besonders bevorzugt sind Divanillin-Mengen im Bereich zwischen 0,0004 und 0,0007 Gew.-% (4 und 7 ppm).

Die angegebenen erfindungsgemäßen verzehrfertigen Lebensmittel und Lebensmittel-Halbfertigwaren unterscheiden sich von den aus der JP 07-179853 A2 ableitbaren Lebensmitteln durch den geringeren Anteil an Divanillin. Tatsächlich muss die Menge an Divanillin deutlich über den für die Zwecke der vorliegenden Erfindung bevorzugten Werten liegen, wenn Divanillin als Antioxidationsmittel wirken soll. Zu den gemäß der JP 07-179853 A2 bevorzugten höheren Konzentrationswerten hin nimmt zudem der durch das Divanillin vermittelte geschmackliche Eindruck der Mundfülle, Sahnigkeit usw. zu Gunsten eines vanillinartigen Eigengeschmacks ab, was im vorliegenden Zusammenhang als ungünstig empfunden wird.

Weiter bevorzugt sind verzehrfertige Lebensmittel oder Lebensmittel-Halbfertigwaren, die
- Divanillin (vorzugsweise in der oben angegebenen Menge),
- Vanillin
sowie
- gegebenenfalls einen oder mehrere weitere Aroma- und/oder Geschmackstoffe umfassen,
wobei das Stoffmengenverhältnis von Divanillin zu Vanillin größer ist als 1 : 200, vorzugsweise größer als 1 : 100.

Und schließlich sind auch verzehrfertige Lebensmittel oder Lebensmittel-Halbfertigwaren bevorzugt, die
- synthetisches Divanillin (vorzugsweise in der oben angegebenen Menge),
- Vanillin
sowie
gegebenenfalls einen oder mehrere weitere Aroma- und/oder Geschmackstoffe umfassen.

Hinsichtlich der Unterschiede zu verzehrfertigen Lebensmitteln bzw. Lebensmittel-Halbfertigwaren, die einen Vanilleschoten-Extrakt umfassen, verweisen wir auf unsere Ausführungen zu der erfindungsgemäßen Arömastoffkomposition, die insoweit sinngemäß gelten.

Die Erfindung betrifft auch ein Verfahren zum Aromatisieren eines Lebensmittels, bei dem dem zu aromatisierenden Lebensmittel eine sensorisch wirksame Menge Divanillin zugesetzt wird, wobei die Menge zugesetzten Divanillins 0,00099 Gew.% nicht überschreitet, bezogen auf die Gesamtmasse des aromatisierten Lebensmittels. Hinsichtlich der besonders bevorzugten Mengenbereiche für das zuzusetzende Divanillin verweisen wir auf die Angaben zu den bevorzugten Mengen in verzehrfertigen Lebensmitteln.

Aus dem Vorgesagten ergibt sich, dass in besonders bevorzugten Ausführungen der Erfindung Divanillin in Kombination mit anderen Aroma- und/oder Geschmacksstoffen und/oder Naturstoffextrakten verwendet wird. Auf diese Weise kann ein besonders abgerundetes und verfeinertes sensorisches Profil erzielt werden.

Beispiele für Geschmackstoffe oder Aromastoffe, die zusammen mit dem Divanillin eingesetzt werden können, finden sich z.B. in K. Bauer, D. Garbe und H. Surburg, Common Fragrance and Flavor Materials, 4th. Ed., Wiley-VCH, Weinheim 2001. Es seien beispielsweise genannt: Ester (gesättigt oder ungesättigt) wie z.B. Ethylbutyrat, Allylcapronat, Benzylacetat, Methylsalicylat; organische Säuren (gesättigt und ungesättigt) wie z.B. Buttersäure, Essigsäure, Methylbuttersäure, Capronsäure; Alkohole (gesättigt und ungesättigt) wie z.B. Ethanol, Propylenglykol, Octenol, cis-3-Hexanol, Benzylalkohol, Phenylethylalkohol; Aldehyde (gesättigt und ungesättigt) wie z.B. Acetaldehyd, Isobutyraldehyd, Nonadienal, Benzaldehyd, 3-Phenylacetaldehyd; Ketone wie z.B. Menthon; Ether wie z.B. 4-Hydroxy-5-methylfuranon, 3-Hydroxy-4,5-dimethyl-2-(5H)-furanon, 2,5-Dimethyl-3-hydroxy-2(3H)-furanon, 2(5)-Ethyl-4-hydroxy-5(2)-methyl-3(2H)-furanon, p-Methoxybenzaldehyd, Guajacol, Methoxyvinylphenol; Acetale wie z.B. Acetaldehyddiethylacetal; Lactone wie z.B. gamma-Decalacton; Terpene wie z.B. Limonen, Linalool, Terpinen, Terpineol, Citral (Geranial und Neral), Menthol; Sulfide und Disulfide wie z.B. Dimethylsulfid, Difurfuryldisulfid, Methylthiopropanal; Thiole wie z.B. Methylfuranthiol; Pyrazine und Pyrroline wie z.B. Methylpyrazin, Acetylpyrazin, 2-Propionylpyrrolin, 2-Acetylpyrrolin.

Um ein abgerundetes und volleres, sahnigeres und cremigeres sensorisches Profil zu erzielen, sind Aroma- und Geschmackstoffkompositionen vorteilhaft, die neben Divanillin zusätzlich ein Lacton und/oder eine Säure enthalten. Vorteilhafte Lactone sind beispielsweise delta-Octalacton, delta-Nonalacton, Massoilacton, delta-Undecalacton, delta-Dodecalacton, delta-Decalacton, gamma-Nonalacton, gamma-Decalacton, gamma-Dodecalacton, gamma-Tetradecalacton, vorteilhafte Säuren sind beispielsweise Buttersäure, Isobuttersäure, lsovaleriansäure, Capronsäure, Caprylsäure, Caprinsäure, Laurinsäure, Myristinsäure sowie deren Ester.

Die erfindungsgemäßen Aromastoffkompositionen und die erfindungsgemäßen verzehrfertigen Lebensmittel bzw. Lebensmittel-Halbfertigwaren können die üblichen-Grund-, Hilfs- und Zusatzstoffe für Nahrungs- oder Genussmittel enthalten. Ferner können sie Wasser umfassen. Typischerweise liegt der Anteil an üblichen Grund-, Hitfs- und Zusatzstoffen und/oder der Anteil an Wasser im Bereich über 5 Gew.-% (bezogen auf die Gesamtmasse des verzehrfertigen Lebensmittels oder der Lebensmittel-Halbfertigware) und ist geringer als 80 Gew.-%. Die eingesetzten Mengen können jedoch natürlich auch geringer oder größer sein.

Sofern die erfindungsgemäßen Aromastoffkompositionen bzw. die erfindungsgemäßen verzehrfertigen Lebensmittel oder Lebensmittel-Halbfertigwaren neben Divanillin auch Vanillin enthalten, liegt das Gewichtsverhältnis von Divanillin:Vanillin vorteilhafterweise im Bereich von 1 : 5 bis 1 : 50, bevorzugt im Bereich von 1 : 10 bis 1 : 30. Die genannten Verhältnisse sind besonders vorteilhaft für Sahne-Vanille-Aromen und vermitteln Geschmackseindrücke, die durch einen Extrakt von Vanille-Schoten nicht erreichbar sind.

Erfindungsgemäße Lebensmittel sind z.B. Backwaren (z.B. Trockenkekse, Kuchen, sonstiges Gebäck), Süßwaren (z.B. Schokoladen, Pralinen, Konfekt, Hart- und Weichkaramellen, Kaugummi), Getreideprodukte (z.B. Frühstückscerealien, Müsliriegel), Milchprodukte (z.B. Milchgetränke, Milcheis, Joghurt, Kefir, Frischkäse, Trockenmilchpulver, fettreduzierte Butter, Buttermilch, Molke), Fruchtzubereitungen (z.B. Konfitüren, Marmeladen, Fruchteis, Fruchtsoßen), Knabberartikel (z.B. gebackene oder frittierte Kartoffelchips oder Kartoffelteigprodukte, Extrudate auf Mais- oder Erdnussbasis), Produkte auf Fett- und Ölbasis oder Emulsionen derselben (z.B. Mayonnaise, Remoulade, Dressings), alkoholische oder nicht-alkoholische Getränke (z.B. Kaffee, Tee, Wein, weinhaltige Getränke, Bier, bierhaltige Getränke, Liköre, Schnäpse, Weinbrände, fruchthaltige Limonaden, isotonische Getränke, Erfrischungsgetränke, Nektare, Obst- und Gemüsesäfte, Frucht- oder Gemüsesaftzubereitungen), Instantgetränke, Fertiggerichte und Suppen, Gewürze, Würzmischungen sowie insbesondere Aufstreuwürzungen (Seasonings), die im Snackbereich Anwendung finden. Erfindungsgemäße Produkte können auch als Halbfertigware zur Herstellung weiterer der Ernährung oder dem Genuss dienenden Zubereitungen dienen. Sie können zudem in Form von Kapseln, Tabletten (nichtüberzogene sowie überzogene Tabletten, z.B. magensaftresistente Überzüge), Dragees, Granulaten, Pellets, Feststoffmischungen, Dispersionen in flüssigen Phasen, als Emulsionen, als Pulver, als Lösungen, als Pasten oder als andere schluck- oder kaubare Zubereitungen als Nahrungsergänzungsmittel vorliegen.

Die erfindungsgemäßen Divanillin enthaltenden Zubereitungen können hergestellt werden, indem das Divanillin als Substanz, als Lösung oder in Form eines Gemisches mit einem festen oder flüssigen Trägerstoff in die Aromastoffkomposition oder das Lebensmittel eingearbeitet wird.

Zur Herstellung der Zubereitungen kann in einer weiteren bevorzugten Ausführungsform das Divanillin und gegebenenfalls andere Bestandteile der erfindungsgemäßen Zubereitung auch vorher in Emulsionen, in Liposomen, z.B. ausgehend von Phosphatidylcholin, in Microsphären, in Nanosphären oder auch in Kapseln aus einer für Lebens- und Genussmittel geeigneten Matrix, z.B. aus Stärke, Stärkederivaten, anderen Polysacchariden, natürlichen Fetten, natürlichen Wachsen oder aus Proteinen, z.B. Gelatine, eingearbeitet werden. Eine weitere Ausführungsform besteht darin, dass das erfindungsgemäße Divanillin vorher mit geeigneten Komplexbildnern, beispielsweise mit Cyclodextrinen oder Cyclodextrinderivaten, bevorzugt β-Cyclodextrin, komplexiert wird und in dieser Form eingesetzt wird.

Die erfindungsgemäßen verzehrfertigen Lebensmittel, Lebensmittel-Halbfertigwaren und Aromastoffkompositionen können weitere Komponenten enthalten wie beispielsweise Konservierungsmittel, Antioxidantien, Emulgatoren, Verdünnungsmittel, Zucker, Zuckeraustauschstoffe, Zuckeralkohole, Süßstoffe, Genusssäuren, Farbstoffe, Färbemittel, Pigmente, geschmacksverstärkene Mittel, Geschmackstoffe, Aromen, Nutraceuticals, Spurenelemente, Mineralien, Vitamine, pflanzliche Extrakte und Ballaststoffe.

Als Konservierungsmittel können die im Lebensmittelbereich für diese Zwecke üblichen Mittel verwendet werden.

Vorteilhaft werden folgende Konservierungsmittel eingesetzt: Kochsalz, Saccharose, Essigsäure, Nitrite, insbesondere Na-, K- und Ca-nitrit, Sulfite, insbesondere Na-, K- und Ca-sulfit. Ausserdem können organischen Säuren bzw. deren Salze eingesetzt werden, insbesondere Sorbinsäure, Benzoesäure, Ameisensäure und die Na-, K- und Ca-Salze dieser Säuren, sowie 4-Hydroxybenzoesäureester, Salicylsäure und Dehydracetsäure.

Geeignete Antioxidantien und Stoffe, die die antioxidative Wirkung verstärken können, sind die natürlich vorkommenden Tocopherole und deren Derivate, Tocotrienole, Flavonoide, Ascorbinsäure und ihre Salze , alpha-Hydroxysäuren (z.B. Zitronen säure, Milchsäure, Apfelsäure, Weinsäure) und deren Na-, Ka- und Ca-Salze, aus Pflanzen isolierte Inhaltsstoffe, Extrakte bzw. Fraktionen davon z.B. aus Tee, Grüntee, Algen, Traubenkernen, Weizenkeimen, Rosmarin, Oregano; Flavonoide, Quercetin, phenolische Benzylamine. Weiterhin sind als Antioxidantien Propylgallat, Octylgallat, Dodecylgallat, Butylhydroxyanisol (BHA), Butylhydroxytoluol (BHT), Lecithine, Mono- und Diglyceride von Speisefettsäuren verestert mit Citronensäure, Orthophosphate und Na-, Ka- und Ca-Salze der Monophosphorsäure und Ascorbylpalmitat geeignet.

Geeignete Emulgatoren sind beispielsweise Lecithine, Na-, K-, Al- Mg- und Ca- Salze der Speisefettsäuren, hydroxiliertes Lecithin, Mono- und Diglyceride von Speisefettsäuren, verestert mit Essigsäure, Milchsäure, Citronensäure oder Monoacetyl- und Diacetylweinsäure, Succinylierte Monoglyceride, Ammoniumphosphatide, Mononatrium-Phosphat-Derivate von Mono- und Diglyceriden von Speisefetten oder - ölen, oder Speisefett bildenden Fettsäuren, ethoxylierte Mono- und Diglyceride, Zuckerester (Ester von Saccarose und Speisefettsäuren), Polyglycerin-Polyrizinoleat, Propylenglykolester von Speisefettsäuren, Lactylester von Speisefettsäuren, Natriumstearoyllactyl-2-lactat, Calciumstearoyllactyl-2-lactat, Stearyltartrat, Sorbitan-Monostearat, Sorbitan-Tristearat, Sorbitan-Monolaurat, Sorbitan-Monooleat, Sorbitan-Monopalmitat, Polysorbat 20, Polysorbat 40, Polysorbat 60, Polysorbat 65, Polysorbat 80, Stearyl-Monoglyceridylcitrat, Succistearin, Copolymer-Kondensate von Ethylenoxid und Propylenoxid, Dioctyl-Natrium-Sulfsuccinat, Natriumlaurylsulfat, Natriumstearylfumarat, Lactylierte Fettsäureester von Glycerin und 1,2-Propylenglykol.

Die erfindungsgemäßen Aromastoffkompositionen bzw. verzehrfertigen Lebensmittel oder Lebensmittel-Halbfertigwaren können ein oder mehrere Verdünnungsmittel enthalten. Vorteilhafte Verdünnungsmittel sind beispielsweise Ethanol, Triacetin und 1,2-Propylenglykol.

Typische Zucker, die Bestandteil der Aromastoffkompositionen bzw. Lebensmittel oder Lebensmittel-Halbfertigwaren sein können, sind Glucosesirupe, Glucose-Fructose Sirupe, Isomerose-Sirupe, Isoglucosesirupe, Invertzuckersirupe und kristalline Zucker wie Saccharose, Glucose, Lactose, hydrolisierte Lactose, Sorbose, Arabinose, Xylose, Mannose, Maltose, Galactose, Maltotriose oder Fructose genannt.

Geeignete Zuckeraustauschstoffe sind Zuckeralkohole wie beispielsweise Mannit, Sorbit und Sorbitsirup, Isomalt (z.B. Palatinit^{®}), Maltit und Maltitsirup, Laktit, Xylit, Erythrit, Leucrose, Arabinol, Arabitol, Adonitol, Alditol, Ducitol, Iditol, aber auch Frucooligosaccharide (z.B. Raftilose^{®}), Oligofructose oder Polydextrose.

Als typische Süßstoffe, die Bestandteil der Aromastoffkompositionen bzw. Lebensmittel oder Lebensmittel-Halbfertigwaren sein können, seien Saccharin (gegebenenfalls als Na-, K- oder Ca-Salz), Aspartam (z.B. NutraSweet^{®}) Cyclamat (gegebenenfalls als Na- oder Ca-Salz), Acesulfam-K (z.B. Sunett^{®}), Thaumatin oder Neohesperidin-Dihydrochalkon genannt. Es können natürlich auch andere Süßstoffe wie Steviosid, Rebaudiosid A, Glycyrrhizin, Ultrasüß, Osladin, Brazzein, Miraculin, Pentadin, Phyllodulcin, Dihydrochalcone, Arylharnstoffe, trisubstituierte Guanidine, Glycyrrhizin, Superaspartam, Suosan, Sucralose (Trichlorgalactosaccarose, TGS), Alitam, Monellin oder Neotame^{®} verwendet werden.

Geeignete Genusssäuren sind beispielsweise Citronensäure, Adipinsäure, Äpfelsäure, Fumarsäure, Bernsteinsäure, Milchsäure, Essigsäure, Gluconsäure, Weinsäure.

Als geschmachsverstärkende Mittel können Stoffe wie Natrium- und Kaliumsalze (z.B. Natriumchlorid, Kaliumchlorid) und Geschmacksverstärker eingesetzt werden wie z.B. Maltol, Furaneol zur Verbesserung des Süßgeschmackes als auch Natrium-L-glutamat (MSG, Glutaminsäure), Inosin-5'-monophosphat (IMP), 5-Guanosinmonophosphat (GMP), hydrolisierte vegetabile Proteine (HVP), Hefeextrakte, Aminosäuren und Saucenextrakte wie z.B. Boullion, Sojasauce, Würzsoße, Fischsauce, Austernsauce).

Die erfindungsgemäßen Aromastoffkompositionen bzw. verzehrfertigen Lebensmittel oder Lebensmittel-Halbfertigwaren können darüberhinaus gegebenenfalls ernährungsphysiologisch wirksame Stoffe oder Stoffgemische enthalten (Nutraceuticals). Es seien beispielsweise genannt Vitamin A und Derivate, Carotine, Vitamin C (Ascorbinsäure), Vitamin E (Tocopherol) und Derivate, Vitaminen der B- und D-Reihe wie Vitamin B₆ (Nicotinamid), Vitamin B₁₂, Vitamin D₁, Vitamin D₃, Vitamin F, Folsäure, Biotin, Aminosäuren, Verbindungen der Elemente Magnesium, Silicium, Phosphor, Calcium, Mangan, Eisen oder Kupfer, Enzyme wie z.B. Bromelain, ungesättigte Fettsäuren, w-3-Fettsäuren, mehrfach ungesättigte Fettsäuren, γ-Linolensäure, Ölsäure, Eicosapentaënsäure, Docosahexaënsäure und deren Derivate, Bisabolol, Coffein, Capsaicin, Thymol, Campher, Extrakte oder andere Produkte pflanzlicher und tierischer Herkunft, z. B. Nachtkerzenöl, Borretschöl oder Johannisbeerkernöl, Fischöle, Lebertran, Ceramide und Ceramid-ähnliche Verbindungen, Pflanzenextrakte wie z. B. Arnika, Aloe, Bartflechte, Efeu, Brennessel, Ginseng, Henna, Kamille, Ringelblume, Rosmarin, Salbei, Schachtelhalm oder Thymian, Öle wie Aprikosenkernöl, Avocadoöl, Babassuöl, Baumwollsamenöl, Borretschöl, Distelöl, Erdnussöl, Gamma-Oryzanol, Hagebuttenkernöl, Hanföl, Haselnussöl, Johannisbeersamenöl, Jojobaöl, Kirschkernöl, Lachsöl, Leinöl, Maiskeimöl, Makadamianussöl, Mandelöl, Nachtkerzenöl, Nerzöl, Olivenöl, Pekannussöl, Pfirsichkernöl, Pistazienkernöl, Rapsöl, Reiskeimöl, Rizinusöl, Safloröl, Sesamöl, Sojaöl, Sonnenblumennöl, Teebaumöl, Traubenkernöl oder Weizenkeimöl, Ballaststoffe wie z.B. Weizenfaser, Orangenfaser, Apfelfaser, Karottenfaser, Weizenkleie, Fructo-Oligosaccharide (z.B. lnulin).

Als weitere Bestandteile für die erfindungsgemäßen Aromastoffkompositionen, verzehrfertigen Lebensmittel oder Lebensmittel-Halbfertigwaren können - wie erwähnt - übliche Grund-, Hilfs- und Zusatzstoffe für Nahrungs- oder Genussmittel verwendet werden, z.B. Wasser, Gemische frischer oder prozessierter, pflanzlicher oder tierischer Grund- oder Rohstoffe (z.B. rohes, gebratenes, getrocknetes, fermentiertes, geräuchertes und/oder gekochtes Fleisch, Ei, Knochen, Knorpel, Fisch, Gemüse; Früchte, Kräuter, Nüsse, Gemüse- oder Fruchtsäfte oder -pasten oder deren Gemische), verdauliche oder nicht verdauliche Kohlenhydrate (z.B. Saccharose, Maltose, Fructose, Glucose, Dextrine, Amylose, Amylopektin, Inulin, Xylane, Cellulose), Zuckeralkohole (z.B. Sorbit), natürliche oder gehärtete Fette (z.B. Talg, Schmalz, Palmfett, Kokosfett, gehärtetes Pflanzenfett), Öle (z.B. Sonnenblumenöl, Erdnussöl, Maiskeimöl, Olivenöl, Distelöl, Fischöl, Sojaöl, Sesamöl), Fettsäuren oder deren Salze (z.B. Kaliumstearat), proteinogene oder nicht-proteinogene Aminosäuren und verwandte Verbindungen (z.B. Taurin, Kreatin, Kreatinin), Peptide, native oder prozessierte Proteine (z.B. Gelatine), Enzyme (z.B. Peptidasen, Glycosidasen, Lipasen), Nukleinsäuren, Nucleotide, geschmacksmodulierende. Stoffe (z.B. Natriumglutamat, 2-Phenoxypropionsäure, Hydroxyflavanone), Emulgatoren (z.B. Lecithine, Diacylglycerole), Stabilisatoren (z.B. Carageenan, Alginat), Konservierungsstoffe (z.B. Benzoesäure, Sorbinsäure), Antioxidantien (z.B. Tocopherol, Ascorbinsäure), Chelatoren (z.B. Citronensäure), organische oder anorganische Säuerungsmittel (z.B. Äpfelsäure, Essigsäure, Citronensäure, Weinsäure, Phosphorsäure), zusätzliche Bitterstoffe (z.B. Chinin, Coffein, Limonin), Süßstoffe (z.B. Saccharin, Cyclamat, Aspartam, Neotam, Neohesperidindihydrochalcon, Sucralose), mineralische Salze (z.B. Natriumchlorid, Kaliumchlorid, Magnesiumchlorid, Natriumphosphate), die enzymatische Bräunung verhindernde Stoffe (z.B. Sulfit, Ascorbinsäure), etherische Öle, Pflanzenextrakte, natürliche oder synthetische Farbstoffe oder Farbpigmente (z.B. Carotinoide, Flavonoide, Anthocyane, Chlorophyll und deren Derivate), Gewürze, sowie Riechstoffe, synthetische, natürliche oder naturidentische Aroma- und Geschmackstoffe. Die Erfindung wird durch die nachfolgenden Beispiele erläutert.

### Beispiele

Sofern nicht anders angegeben, beziehen sich alle Angaben auf das Gewicht.

### Beispiel 1

10 g Vanillin werden in 1.000 ml Trisacetatpuffer bei pH 5 in der Wärme bei ca. 40-50°C gelöst. Nach Abkühlung werden 20 g einer 0,1 Gew.-%igen wässerigen Meerrettich-Peroxidase-Lösung (Firma Aldrich, 550 U/mg) zudosiert. Danach werden 75 ml Wasserstoffperoxid (3 Gew.-%ig in Wasser) tropfenweise über 30 min. unter Rühren zugegeben. Die Lösung lässt man dann 18 h bei 35-38°C stehen. Das ausgefallene Divanillin wird abfiltriert und gut mit Wasser und Methanol gewaschen und ofengetrocknet. Erhalten werden so ca. 9 g Divanillin mit einer Reinheit von etwa 90 Gew.-%.

### Beispiel 2

Zu einer Lösung von 25 g Eisentrichlorid in 500 ml Wasser werden 15 g Vanillin gegeben und suspendiert. Das Gemisch wird auf 50°C aufgeheizt und insgesamt 4 h gerührt. Nach Abkühlung mit einem Eisbad wird das ausgefallene Divanillin abfiltriert und mit Wasser und Methanol gewaschen und anschließend getrocknet. Erhalten werden so ca. 8 g Divanillin mit einer Reinheit von etwa 90 Gew.-%.

### Beispiel 3

Zerkleinerte Vanilleschoten unterschiedlichen Ursprunges werden mit der ca. 5 fachen Menge an Lösungsmittel für 4-8 h bei 50°C extrahiert. Geeignete Lösungsmittel sind beispielsweise Ethanol/Wasser-Gemische, Methanol, Pyridin, Dimethylsulfoxid oder N,N-Dimethylformamid. Der Extrakt wird filtriert, eingedampft und anschließend per HPLC-UV und LC-MS analysiert.

Die in der nachfolgenden Tabelle angegebenen Divanillin-Konzentrationen beziehen sich auf die Konzentration in der eingesetzten Vanille-Schote.

| Ursprung | Lösungsmittel | Divanillin |
|---|---|---|
| Vanilleschoten aus Madagaskar | Dimethylsulfoxid | 13 ppm |
| Vanilleschoten aus Mexiko | Methanol | 90 ppm |
| Vanilleschoten aus Tahiti | Ethanol/Wasser 70vol% | 30 ppm |
| Vanilleschoten aus Tahiti | N,N-Dimethylformamid | 30 ppm |

### Beispiel 4.

### Joghurt-Masse mit 0,1% Fett - Aromadosierung 50g / 100kg

| Sahne-Vanille-Aroma | Standard | mit Divanillin |
|---|---|---|
| Diacetyl | 10 Teile | 10 Teile |
| Acetoin | 10 Teile | 10 Teile |
| Anisaldehyd | 1 Teil | 1 Teil |
| Decalacton delta | 1 Teil | 1 Teil |
| Heliotropin | 40 Teile | 40 Teile |
| Vanillin | 150 Teile | 150 Teile |
| Siliziumdioxid | 50 Teile | 50 Teile |
| Dextrose | 738 Teile | 738 Teile |
| Divanillin | 0 Teile | 10 Teile |

Die Joghurt-Masse mit dem das Divanillin enthaltenden Aroma zeichnet sich besonders durch einen volleren Geschmack im Vergleich mit dem Standard aus. Die cremigen, sahnigen Noten werden verstärkt, der Joghurt erhält mehr Mundfülle und eine deutlich stärkere, an Milchfett und Sahne erinnernde Note. Dieser Charakter entwickelt sich besonders im Nachgeschmack.

### Beispiel 5

### Instant-Dessert mit Milchpulver ohne Frischmilchzugabe - Aromadosierung 50g / 100kg

| Sahne-Vanille-Aroma | Standard | mit Divanillin |
|---|---|---|
| Diacetyl | 10 Teile | 10 Teile |
| Acetoin | 10 Teile | 10 Teile |
| Anisaldehyd | 1 Teil | 1 Teil |
| Decalacton delta | 1 Teil | 1 Teil |
| Heliotropin | 40 Teile | 40 Teile |
| Vanillin | 150 Teile | 150 Teile |
| Siliziumdioxid | 50 Teile | 50 Teile |
| Dextrose | 738 Teile | 738 Teile |
| Divanillin | 0 Teile | 10 Teile |

Das Instant-Dessert mit dem das Divanillin enthaltenden Aroma zeichnet sich besonders durch einen volleren Geschmack im Vergleich mit dem Standard aus. Die cremigen, sahnigen Noten werden verstärkt, das Instant-Dessert erhält mehr Mundfülle und eine deutlich stärkere, an Milchfett und Sahne erinnernde Note. Dieser Charakter entwickelt sich besonders im Nachgeschmack.

### Beispiel 6

### Speiseeis mit niedrigem Fettgehalt - Aromadosierung 150g / 100kg

| Sahne-Vanille-Aroma | Standard | mit Divanillin |
|---|---|---|
| Diacetyl | 10 Teile | 10 Teile |
| Acetoin | 10 Teile | 10 Teile |
| Anisaldehyd | 1 Tei | 1 Teil |
| Decalacton delta | 1 Teil | 1 Teil |
| Heliotropin | 40 Teile | 40 Teile |
| Vanillin | 150 Teile | 150 Teile |
| Siliziumdioxid | 50 Teile | 50 Teile |
| Dextrose | 738 Teile | 738 Teile |
| Divanillin | 0 Teile | 10 Teile |

Das Speiseeis mit dem das Divanillin enthaltenden Aroma zeichnet sich besonders durch einen volleren Geschmack im Vergleich mit dem Standard aus. Die cremigen, sahnigen Noten werden verstärkt, das Speiseeis erhält mehr Mundfülle und eine deutlich stärkere, an Milchfett und Sahne erinnernde Note. Dieser Charakter entwickelt sich besonders im Nachgeschmack.

### Beispiel 7

### fettreduzierte Margarine (Halbfettmargarine) - Aromadosierung 35g / 100kg

| Butter-Aroma | Standard | mit Divanillin |
|---|---|---|
| gamma-Undecalacton | 1 Teil | 1 Teil |
| gamma Nonalacton | 1 Teil | 1 Teil |
| Furaneol 15% in Triacetin | 5 Teile | 5 Teile |
| gamma Decalacton | 10 Teile | 10 Teile |
| gamma Dodecalacton | 10 Teile | 10 Teile |
| Diacetyl | 25 Teile | 25 Teile |
| delta Dodecalacton | 50 Teile | 50 Teile |
| Caprylsäure | 50 Teile | 50 Teile |
| Buttersäure | 100 Teile | 100 Teile |
| delta Decalacton | 100 Teile | 100 Teile |
| Pflanzenöltriglyceride | 644 Teile | 644 Teile |
| Divanillin | 0 Teile | 5 Teile |

Für den Einsatz in Halbfettmaragarinen werden Aromen gesucht, die einen buttrigen, cremigen an Vollfett erinnerenden Charakter haben. Bisherige Aromen konnten diesen Anforderungen nur zum Teil entsprechen.

Das Aroma mit Zusatz von Divanillin vermittelt im Vergleich mit dem Standard ein deutlich verbessertes Geschmacksbild in Richtung Butter und Vollfettcharakter.

## Patentansprüche

1. Verwendung von Divanillin als Aromastoff,

2. Verwendung von Divanillin zur Vermittlung oder Verstärkung eines Geschmackseindrucks oder mehrerer Geschmackseindrücke aus der Gruppe Cremigkeit, Sahnigkeit, Haftfestigkeit, Milchfettigkeit, Buttrigkeit, Süße und Mundfülle.

3. Verwendung nach Anspruch 1 oder 2 in einer Lebensmittel-Halbfertigware oder in einem verzehrfertigen Lebensmittel.

4. Aromastoffkomposition zum Aromatisieren eines Lebensmittels, umfassend
- Divanillin,
- Vanillin
sowie
- gegebenenfalls einen oder mehrere weitere Aroma- und/oder Geschmackstoffe,
wobei
a) das Stoffmengenverhältnis von Divanillin zu Vanillin größer ist als 1 : 200, vorzugsweise größer als 1 : 100, oder
b) die Aromastoffkomposition synthetisches Divanillin umfasst.

5. Aromastoffkomposition zum Aromatisieren einer Halbfertigware oder eines verzehrfertige Lebensmittels, umfassend
- Divanillin in einer Menge von 0,1 bis 50 Gew.-%, bezogen auf die Gesamtmasse der Aromastoffkomposition, sowie
- einen oder mehrere weitere Aroma- und/oder Geschmackstoffe.

6. Verzehrfertiges Lebensmittel oder Lebensmittel-Halbfertigware, umfassend
- Divanillin in einer Menge im Bereich zwischen dem Geschmacksschwellenwert nämlich deutlich unterhalb von 1 ppm und 0,00099 Gew.%, bezogen auf die Gesamtmasse des Lebensmittels, sowie
- gegebenenfalls einen oder mehrere weitere Aroma- und/oder Geschmackstoffe.

7. Verzehrfertiges Lebensmittel oder Lebensmittel-Halbfertigware nach Anspruch 6, wobei die Menge an Divanillin im Bereich zwischen 0,0002 und 0,0009 Gew.% liegt, bezogen auf die Gesamtmasse des Lebensmittels.

8. Verzehrfertiges Lebensmittel oder Lebensmittel-Halbfertigware, umfassend
- Divanillin,
- Vanillin
sowie
- gegebenenfalls einen oder mehrere weitere Aroma- und/oder Geschmackstoffe,
wobei
a) das Stoffmengenverhältnis von Divanillin, zu Vanillin größer ist als 1 : 200, vorzugsweise größer als 1 : 100, oder
b) das verzehrfertige Lebensmittel oder die Lebensmittel-Halbfertigware synthetisches Divanillin umfasst.

9. Verfahren zum Aromatisieren eines Lebensmittels, **dadurch gekennzeichnet, dass** dem zu aromatisierenden Lebensmittel eine sensorisch wirksame Menge Divanillin zugesetzt wird, wobei die Menge zugesetzten Divanillins 0,00099 Gew.% nicht überschreitet, bezogen auf die Gesamtmasse des aromatisierten Lebensmittels.

## Claims

1. Use of divanillin as an aroma substance.

2. Use of divanillin for imparting or enhancing a taste impression or a plurality of taste impressions from the group comprising velvetiness, creaminess, adherence, milk fattiness, butteriness, sweetness and mouth fullness.

3. Use according to claim 1 or claim 2 in a semifinished foodstuff or in ready-to-eat foodstuff.

4. An aroma substance composition for aromatising a foodstuff comprising
- divanillin,
- vanillin and
- optionally one or more further aroma substances and/or flavourings,
wherein
a) the molar ratio of divanillin to vanillin is greater than 1:200, preferably greater than 1:100, or
b) the aroma substance composition comprises synthetic divanillin.

5. An aroma substance composition for aromatising a semifinished product or a ready-to-eat foodstuff comprising
- divanillin in a quantity of 0.1 to 50 wt.%, relative to the total mass of the aroma substance composition, and
- one or more further aroma substances and/or flavourings.

6. A ready-to-eat foodstuff or semifinished foodstuff comprising
- divanillin in a quantity in the range between the taste threshold value, namely distinctly below 1 ppm, and 0.00099 wt.%, relative to the total mass of the foodstuff, and
- optionally one or more further aroma substances and/or flavourings.

7. A ready-to-eat foodstuff or semifinished foodstuff according to claim 6, wherein the quantity of divanillin is in the range between 0.0002 and 0.0009 wt.%, relative to the total mass of the foodstuff.

8. A ready-to-eat foodstuff or semifinished foodstuff comprising
- divanillin,
- vanillin and
- optionally one or more further aroma substances and/or flavourings,
wherein
a) the molar ratio of divanillin to vanillin is greater than 1:200, preferably greater than 1:100, or
b) the ready-to-eat foodstuff or the semifinished foodstuff comprises synthetic divanillin.

9. A method for aromatising a foodstuff, **characterised in that** an organoleptically active quantity of divanillin is added to the foodstuff to be aromatised, the added quantity of divanillin not exceeding 0.00099 wt.% relative to the total mass of the aromatised foodstuff.

## Revendications

1. Utilisation de la divanilline en tant qu'agent aromatique.

2. Utilisation de la divanilline pour communiquer ou pour renforcer une impression gustative ou plusieurs impressions gustatives du groupe des impressions onctueuse, crémeuse, adhérente, de graisse laitière, de beurre, de sucré et de plénitude en bouche.

3. Utilisation selon la revendication 1 ou 2 dans une denrée alimentaire semi-finie ou dans une denrée alimentaire prête à consommer.

4. Composition d'agents aromatiques pour l'aromatisation d'une denrée alimentaire, comprenant
- de la divanilline
- de la vanilline
ainsi que
- le cas échéant un ou plusieurs autres agents aromatiques ou gustatifs,
sachant que
a) le rapport des quantités de substance de la divanilline à la vanilline est plus grand que 1 : 200, de préférence plus grand que 1 : 100 ou que
b) la composition d'agents aromatiques comprend de la divanilline synthétique.

5. Composition d'agents aromatiques pour l'aromatisation d'une marchandise semi-finie ou d'une denrée alimentaire prête à consommer, comprenant
- de la divanilline en une quantité de 0,1 à 50 % en poids, rapportée à la masse totale de la composition d'agents aromatiques, ainsi que
- un ou plusieurs autres agents aromatiques ou gustatifs.

6. Denrée alimentaire prête à la consommation ou denrée alimentaire semi-finie comprenant
- de la divanilline en une quantité comprise entre le seul de perception gustative, en l'occurrence nettement en dessous de 1 ppm, et 0,00099 % en poids, rapportée à la masse totale de la denrée alimentaire, ainsi que
- le cas échéant un ou plusieurs autres agents aromatiques ou gustatifs.

7. Denrée alimentaire prête à la consommation ou denrée alimentaire semi-finie selon la revendication 6, la quantité de divanilline étant comprise dans l'intervalle de 0,0002 à 0,0009 % en poids, rapportée à la masse totale de la denrée alimentaire.

8. Denrée alimentaire prête à la consommation ou denrée alimentaire semi-finie comprenant
- de la divanilline
- de la vanilline
ainsi que
- le cas échéant un ou plusieurs autres agents aromatiques ou gustatifs,
sachant que
a) le rapport des quantités de substance de la divanilline à la vanilline est plus grand que 1 : 200, de préférence plus grand que 1 : 100 ou que
b) la denrée alimentaire prête à la consommation ou la denrée alimentaire semi-finie comprend de la divanilline synthétique.

9. Procédé pour l'aromatisation d'une denrée alimentaire, **caractérisé en ce que** l'on ajoute à la denrée alimentaire à aromatiser une quantité sensoriellement efficace de divanilline, sachant que la quantité de la divanilline ajoutée ne dépasse pas 0,00099 % en poids, rapportée à la masse totale de la denrée alimentaire aromatisée.
